(19) Europäisches Patentamt
European Patent Office
Office européen des brevets

(11) **EP 4 642 129 A1**

(12) **EUROPEAN PATENT APPLICATION**
published in accordance with Art. 153(4) EPC

(43) Date of publication:
**29.10.2025 Bulletin 2025/44**

(21) Application number: **23906466.0**

(22) Date of filing: **27.10.2023**

(51) International Patent Classification (IPC):
***H04W 72/0453*** *(2023.01)*

(52) Cooperative Patent Classification (CPC):
**H04W 72/0453**

(86) International application number:
**PCT/JP2023/038806**

(87) International publication number:
**WO 2024/135093 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 JP 2022207049**

(71) Applicant: **Hitachi, Ltd.**
**Tokyo 100-8280 (JP)**

(72) Inventors:
• **FUJISHIMA, Kenzaburo**
**Tokyo 100-8280 (JP)**
• **OHMI, Taishi**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **WIRELESS DEVICE, METHOD FOR GENERATING FREQUENCY-HOPPING PATTERN, COMPUTER PROGRAM, AND WIRELESS COMMUNICATION SYSTEM**

(57) To provide a wireless communication device that, when a frequency hopping pattern is to be allocated to each of nearby wireless devices configured to use the same frequency band, defines the frequency hopping pattern for preventing a certain upper limit number of times from being exceeded by the number of times the mutual interference occurs consecutively. Accordingly, one representative wireless device provided by the present invention includes a change amount calculation section and a hopping pattern calculation section. The change amount calculation section calculates the amount of change in a frequency channel of a frequency hopping pattern for frequency hopping that is repeatedly performed by a plurality of wireless devices. The hopping pattern calculation section calculates the frequency hopping pattern in accordance with the amount of change in the frequency channel. The hopping pattern calculation section calculates the frequency hopping pattern that prevents the same frequency channel from being used consecutively between the different wireless devices even if the amount of change is the same.

FIG. 1

**Description**

Technical Field

The present invention relates to a wireless device, a frequency hopping pattern generation method, a computer program, and a wireless communication system.

Background Art

Devices configured for wireless communication perform frequency hopping during communication in which frequencies are switched at a high speed to prevent mutual interference between devices communicating wirelessly within the same frequency band.

If communication timing synchronization can be established between the devices configured for wireless communication, the mutual interference can be suppressed by defining a frequency hopping pattern for selecting different frequencies at the same time.

In a case where the communication timing synchronization cannot be established between the devices configured for wireless communication, the mutual interference can be probabilistically reduced by defining a random frequency hopping pattern instead of a frequency hopping pattern that completely avoids the mutual interference.

The following wireless device is disclosed, for example, in Patent Literature 1.

The wireless device calculates a frequency band f in slot n as $\{(n-1) \bmod F\}+1=f$ (where A mod B is the remainder obtained when A is divided by B), generates pattern 1 by changing the frequency range [n, f] used in each slot from n=1 to n=8, and calculates the frequency band in slot 1 as 1, the frequency band in slot n-1 as f(n-1), and the frequency band f in slot n as $[\{(f_{n-1}-1)+k\} \bmod F]+1=f$. Then, only when the frequency band f calculated as the frequency band to be allocated to slot n has already been allocated to slot 1 to slot n-1, the wireless device reallocates a frequency band f+1 as the frequency band f in slot n, and generates patterns 2 to 7 by changing a pattern for generating the frequency range [n, f] used in each slot from n=2 to n=8 and then by changing such a pattern from k=2 to k=7.

Citation List

Patent Literature

Patent Literature 1: Japanese Unexamined Patent Application Publication No. 2000-151468

Summary of Invention

Technical Problem

However, even if a defined hopping pattern is a random hopping pattern designed in advance to avoid the generation of a hopping pattern with high mutual similarity, there is a problem that a hopping pattern with high mutual similarity will be probabilistically selected.

In view of the above circumstances, the present invention provides a wireless communication device that, when a frequency hopping pattern is to be allocated to each of nearby wireless devices configured to use the same frequency band, defines the frequency hopping pattern for preventing a certain upper limit number of times from being exceeded by the number of times the mutual interference occurs consecutively.

Solution to Problem

In order to solve the above problem, one representative wireless device provided by the present invention includes a change amount calculation section and a hopping pattern calculation section. The change amount calculation section calculates the amount of change in a frequency channel of a frequency hopping pattern for frequency hopping that is repeatedly performed by a plurality of wireless devices. The hopping pattern calculation section calculates the frequency hopping pattern in accordance with the amount of change in the frequency channel. The hopping pattern calculation section calculates the frequency hopping pattern that prevents the same frequency channel from being used consecutively by the plurality of different wireless devices even if the amount of change is the same in each frequency channel.

Advantageous Effects of Invention

The present invention makes it possible to provide a wireless communication device that, when a frequency hopping pattern is to be allocated to each of nearby wireless devices configured to use the same frequency band, defines the frequency hopping pattern for preventing a certain upper limit number of times from being exceeded by the number of times the mutual interference occurs consecutively.

Brief Description of Drawings

FIG. 1 is a diagram illustrating an example of the configuration of a wireless communication system.
FIG. 2 is a diagram illustrating an example of the configuration of a wireless control device.
FIG. 3 is a set of diagrams illustrating the relationship between time-division channels and frequency hopping pattern sequences.
FIG. 4 is a diagram illustrating examples of frequency hopping pattern sequences and hop change amount arrays.
FIG. 5 is a diagram illustrating examples of frequency hopping pattern sequences and hop change amount arrays.
Description of Embodiments

Embodiments of the present invention will now be described with reference to the accompanying drawings. However, the present invention is not limited to the embodiments described below. Further, in the drawings, the same component elements are denoted by the same reference signs.

In a case where a plurality of component elements have the same or similar functions, they may be described by using the same reference signs with different subscripts. Furthermore, in a case where there is no need to distinguish between the above-mentioned plurality of component elements, the subscripts may be omitted in the description.

For example, the position, size, shape, and range of each component element depicted in the drawings may not represent, for example, the actual position, size, shape, and range in order to facilitate the understanding of the present invention. Therefore, the present invention is not necessarily limited to, for example, the positions, sizes, shapes, and ranges disclosed in the drawings.

[First Embodiment]

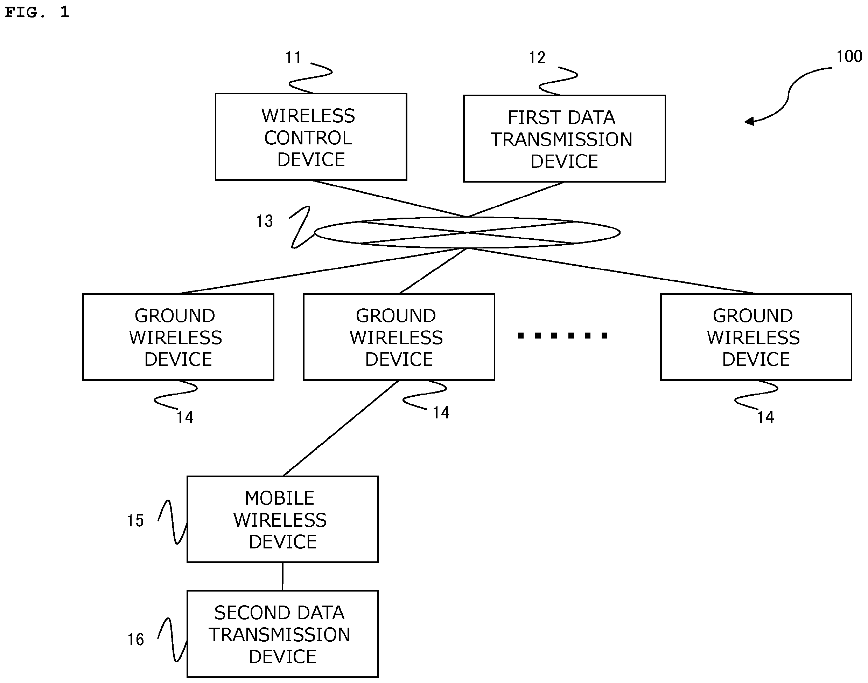

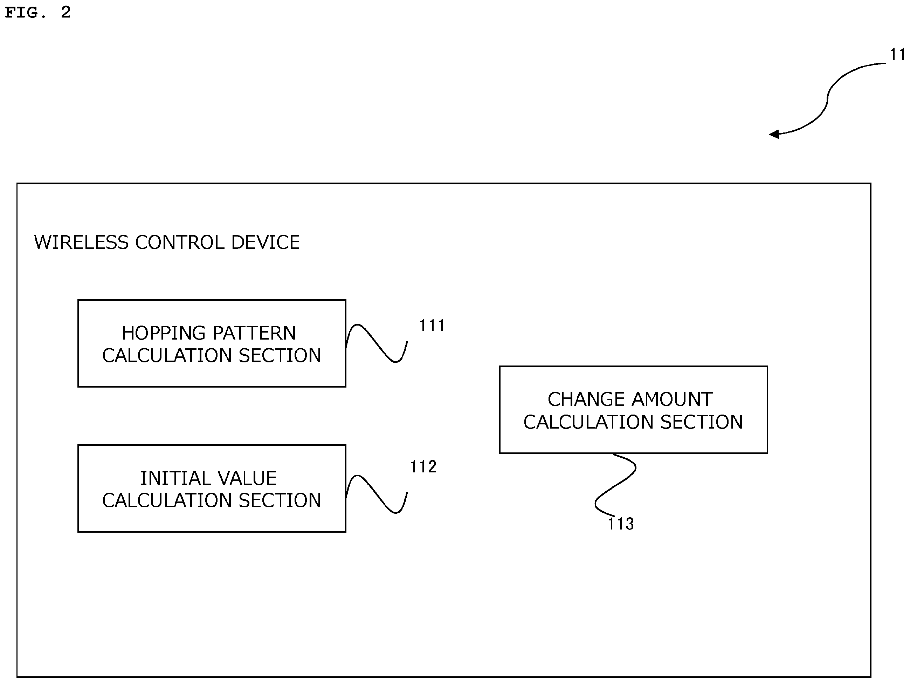

First, a wireless communication system 100 according to a first embodiment will be described with reference to FIGS. 1 and **2.**

FIG. 1 is a diagram illustrating an example of the configuration of the wireless communication system 100.

FIG. 2 is a diagram illustrating an example of the configuration of a wireless control device 11.

The wireless communication system 100 is a telecommunications system that mainly uses radio waves.

The wireless communication system 100 mainly includes the wireless control device 11, a first data transmission device 12, a backhaul network 13, a ground wireless device 14, a mobile wireless device 15, and a second data transmission device 16.

<Wireless Control Device>

The wireless control device 11 provides overall control of the ground wireless device 14.

The wireless control device 11 is connected to the backhaul network 13, and configured to communicate with the first data transmission device 12, the backhaul network 13, and the ground wireless device 14 through the backhaul network 13.

The wireless control device 11 mainly includes a hopping pattern calculation section 111, an initial value calculation section 112, and a change amount calculation section 113.

The hopping pattern calculation section 111 calculates a frequency hopping pattern for communication between the ground wireless device 14 and the mobile wireless device 15.

Here, the frequency hopping pattern denotes a pattern of frequency hopping that is repeatedly executed by a plurality of wireless devices.

The hopping pattern calculation section 111 calculates the frequency hopping pattern in accordance with the initial value of the frequency hopping pattern, which is calculated by the initial value calculation section 112, and with the amount of change in the frequency channel of the frequency hopping pattern, which is calculated by the change amount calculation section 113.

In the present embodiment, the hopping pattern calculation section 111, the initial value calculation section 112, and the change amount calculation section 113 are all included in the wireless control device 11. Alternatively, however, they may be included elsewhere.

For example, the hopping pattern calculation section 111, the initial value calculation section 112, and the change amount calculation section 113 may all be included in the ground wireless device 14.

For example, the hopping pattern calculation section 111 and the initial value calculation section 112 may be included in the wireless control device 11, and only the change amount calculation section 113 may be included in the ground wireless device 14.

<First Data Transmission Device>

The first data transmission device 12 is a ground-based device configured to perform data transmission in a layer higher than a physical layer for controlling a wireless physical connection serving as a transmission medium.

<Backhaul Network>

The backhaul network 13 is a relay line/network that connects terminal access lines and central core communication network "backbone line".

In the present embodiment, the backhaul network 13 is connected to the wireless control device 11, the first data transmission device 12, and the ground wireless device 14.

<Ground Wireless Device>

The ground wireless device 14 is a radio station for wireless communication that is fixed to the ground of the wireless communication system 100.

The ground wireless device 14 mainly includes a transmitter or a receiver or a combination of a transmitter and a receiver, and wirelessly communicates with the mobile wireless device 15.

In the wireless communication system 100, there are a plurality of different ground wireless devices 14, each of which is connected to the mobile wireless device 15.

Each mobile wireless device 15 is connected to one ground wireless device 14. However, each ground wireless device 14 can be connected to a plurality of mobile wireless devices 15.

The ground wireless device 14 is interconnected to the wireless control device 11 and the first data transmission device 12 through the backhaul network 13.

The ground wireless device 14 wirelessly communicates with the mobile wireless device 15, and the wireless communication between the ground wireless device 14 and the mobile wireless device 15 is used as a bearer to transmit and receive upper layer data between these two devices.

The ground wireless device 14 stores a pattern of frequency hopping, and upon startup of the ground wireless device 14, receives a frequency hopping pattern from the wireless control device 11.

The received frequency hopping pattern is stored in a storage device such as a flash memory.

<Mobile Wireless Device>

The mobile wireless device 15 is a radio station that is carried and operated during its movement or during its stoppage at an unspecified location.

The mobile wireless device 15 mainly includes a transmitter, a receiver, or a combination of a transmitter and a receiver, and wirelessly communicates with the ground wireless device 14.

The mobile wireless device 15 is wirelessly communicatively connected to the ground wireless device 14.

The mobile wireless device 15 wirelessly connects to any one of the ground wireless devices 14, and sets, in itself, the same frequency hopping pattern as that stored by the wirelessly connected ground wireless device **14.**

When the mobile wireless device 15 is connected to a different ground wireless device 14 by handover, the mobile wireless device 15 sets the frequency hopping pattern of the newly connected ground wireless device **14.**

Frequency hopping pattern synchronization between the mobile wireless device 15 and the ground wireless device 14 can be achieved, for example, by transmitting the hopping pattern itself through communication between the ground wireless device 14 and the mobile wireless device 15.

Frequency hopping pattern synchronization between the mobile wireless device 15 and the ground wireless device 14 can also be achieved, for example, by using a protocol that makes it possible to autonomously generate a hopping pattern in accordance with the identifier of the ground wireless device 14 to which the mobile wireless device 15 is to be newly connected.

In the present embodiment, the mobile wireless device 15 functions as part of a wireless terminal of the wireless communication system 100. For example, the mobile wireless device 15 is integrated with the second data transmission device 16 to function as a smartphone.

**EP 4 642 129 A1**

<Second Data Transmission Device>

The second data transmission device 16 is a mobile device-side device configured to perform data transmission in a layer higher than a physical layer for controlling a wireless physical connection serving as a transmission medium.

The relationship between time-division channels and frequency hopping pattern sequences will now be described.

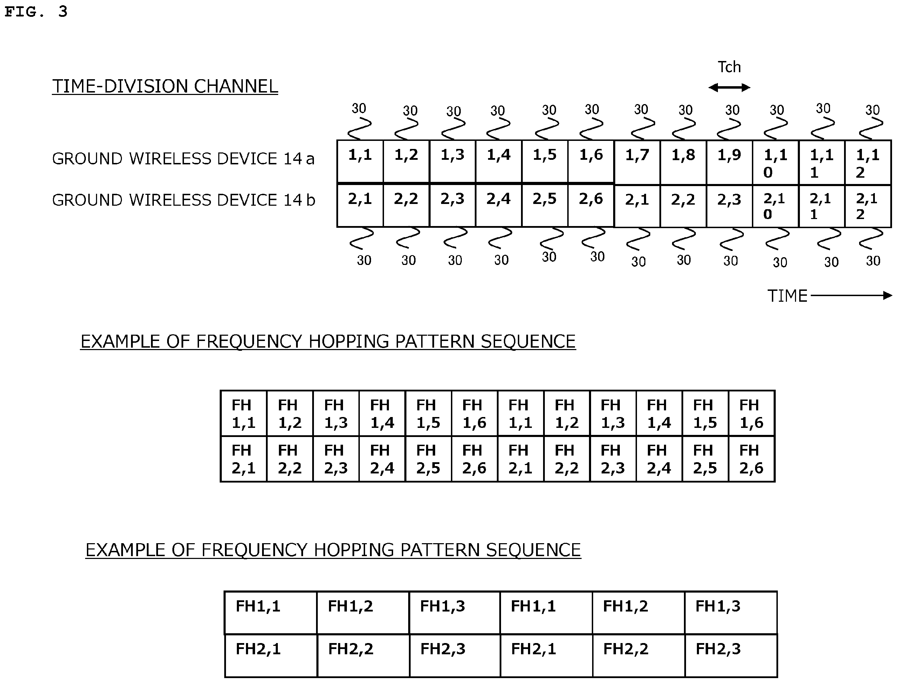

FIG. 3 is a set of diagrams illustrating the relationship between the time-division channels and the frequency hopping pattern sequences.

The upper part of FIG. 3 depicts the time-division channels of two ground wireless devices 14, namely, a ground wireless device 14a and a ground wireless device 14b.

The time length of the time-division channels of the ground wireless devices 14 is Tch seconds. That is to say, the frequency of the ground wireless devices 14 changes at Tch-seconds intervals.

The upper part of FIG. 3 depicts the time-division channels 30 allocated to the ground wireless devices 14.

In the present embodiment, twelve time-division channels 30 are allocated to each of the ground wireless devices 14a and 14b.

Here, "X, Y" indicates the Y-th time-division channel that is allocated to the X-th ground wireless device 14.

For example, the time-division channels 30 allocated to the ground wireless device 14a are "1, 1", "1, 2", ... "1, 12".

Similarly, the time-division channels 30 allocated to the ground wireless device 14b are "2, 1", "2, 2", ... "2, 12".

In the present embodiment, the wireless control device 11 centrally manages the allocation of time-division channels. However, the allocation may be performed in a different manner. For example, the allocation may be performed by the ground wireless device 14.

The middle part of FIG. 3 depicts an example of a sequence of the frequency hopping patterns corresponding to the time-division channels.

The middle part of FIG. 3 indicates a case where the frequency is switched upon each change of time-division channel, and one sequence is allocated to each time-division channel 30 allocated to the ground wireless device 14a.

For example, "FH X, Y", which is one of the time-division channels 30 allocated to the ground wireless device 14a, indicates a frequency number that the X-th ground wireless device 14 uses in the Y-th time-division channel or in a time-division channel group.

The sequence length of the frequency hopping pattern is a finite length. For example, in the middle part of FIG. 3, the sequence length is 6.

That is to say, the time-division channels 30 allocated to the ground wireless devices 14a, 14b work in such a manner that a hopping pattern formed by six frequencies is repeated twice.

For example, the frequency numbers "FH 1, 1" ... "FH 1, 6" are allocated to the time-division channels 30 "1, 1", "1, 2", ... "1, 6", which are allocated to the ground wireless device 14a.

Similarly, the frequency numbers "FH 1, 1" ... "FH 1, 6" are allocated to the time-division channels 30 "1, 7", "1, 8", ... "1, 12", which are allocated to the ground wireless device 14a.

For example, the frequency numbers "FH 2, 1" ... "FH 2, 6" are allocated to the time-division channels 30 "2, 1", "2, 2", ... "2, 6", which are allocated to the ground wireless device 14b.

Similarly, the frequency numbers "FH 2, 1" ... "FH 2, 6" are allocated to the time-division channels 30 "2, 7", "2, 8", ... "2, 12", which are allocated to the ground wireless device 14b.

The lower part of FIG. 3 depicts an example of the sequence of the frequency hopping patterns corresponding to the time-division channels different from those depicted in the middle part of FIG. 3.

The lower part of FIG. 3 indicates a case where a plurality of time-division channels are grouped together, and the frequency is switched upon each crossing between the groups.

Here, as is the case with the middle part of FIG. 3, the sequence length of the frequency hopping pattern is a finite length, and in the lower part, the sequence length is 3.

That is to say, in the lower part of FIG. 3, the frequency is repeatedly switched every time the time-division channel changes by two.

In the present embodiment, the sequence length is 6 or 3. However, the sequence length may alternatively be any other length. For example, the sequence length may be any one of 1 to 9.

A process for calculating the frequency hopping pattern will now be described.

The sequence of the frequency hopping patterns calculated by the hopping pattern calculation section 111 is expressed by Equation (1) below.

5

[Equation 1]

$$F(n) = \{F(n-1) + \Delta(n)\}modN_{ch} \cdots (1)$$

F(n) in Equation (1) represents the sequence of frequency hopping patterns. Here, n indicates an index in the sequence, and is a natural number starting from 0.

In the above instance, when n=0, F(n) is the value calculated by the initial value calculation section 112.

$N_{ch}$ indicates the number of frequency channels in the system. mod indicates an operation for obtaining the remainder of a division result.

$\Delta$(n) indicates the difference in frequency channel number that changes between F(n-1) and F(n).

For example, $\Delta$(0) indicates the difference in frequency channel number between F(L-1) and F(0). In this instance, L is the sequence length.

Stated differently, $\Delta$(n) is expressed as the n-th element of a hop change amount array $\Delta$.

Here, the hop change amount array $\Delta$ is expressed as an array (including one expressed as a mathematical matrix) by Equation (2) below.

[Equation 2]

$$\Delta = \begin{bmatrix} \Delta(0) & \Delta(1) & \cdots & \Delta(L-1) \end{bmatrix} \cdots (2)$$

$\Delta$(n) is calculated by the change amount calculation section 113. In this instance, the elements of the array $\Delta$ calculated by the change amount calculation section 113 do not consecutively remain the same in number.

Further, if the elements of the array $\Delta$ calculated by the change amount calculation section 113 do not consecutively remain the same in number, they may be calculated according to a specific recurrence relation.

For example, in a case where the frequency hopping pattern of the ground wireless device 14a is described, the hopping pattern of the ground wireless device 14a is expressed by Equation (3) below.

[Equation 3]

$$F(m) = \{F(m-1) + \Delta(m)\}modN_{ch} \cdots (3)$$

Similarly, the hopping pattern of the ground wireless device 14b is expressed by Equation (4) below.

[Equation 4]

$$F(o) = \{F(o-1) + \Delta(o)\}modN_{ch} \cdots (4)$$

In a case where F(m-1) of the ground wireless device 14a matches F(o-1) of the ground wireless device 14b and $\Delta$(m) matches $\Delta$(o), the frequencies match two times consecutively when the same hop change amount array is added to the same hopping pattern. As a result, mutual interference occurs consecutively.

Further, in a case where $\Delta$(m+1) and $\Delta$(o+1) also match, the frequencies match three times consecutively when the same hop change amount array is added to the same hopping pattern and the same hop change amount array is additionally added to the same hopping pattern. As a result, mutual interference occurs three times consecutively.

In the above instance, if $\Delta$(m+1) and $\Delta$(o+1) do not match, interference does not occur three times consecutively between the ground wireless device 14a and the ground wireless device 14b.

Stated differently, when subsequent arrays $\Delta$ match N times consecutively beginning with a certain frequency, a frequency allocated to the ground wireless device 14 interferes, N+1 times consecutively, with a frequency allocated to a different ground wireless device 14.

Analyzing the sequence of the frequency hopping patterns in the above manner makes it possible to identify the maximum number of consecutive occurrences of interference.

Examples of the frequency hopping pattern sequences and hop change amount arrays will now be described.

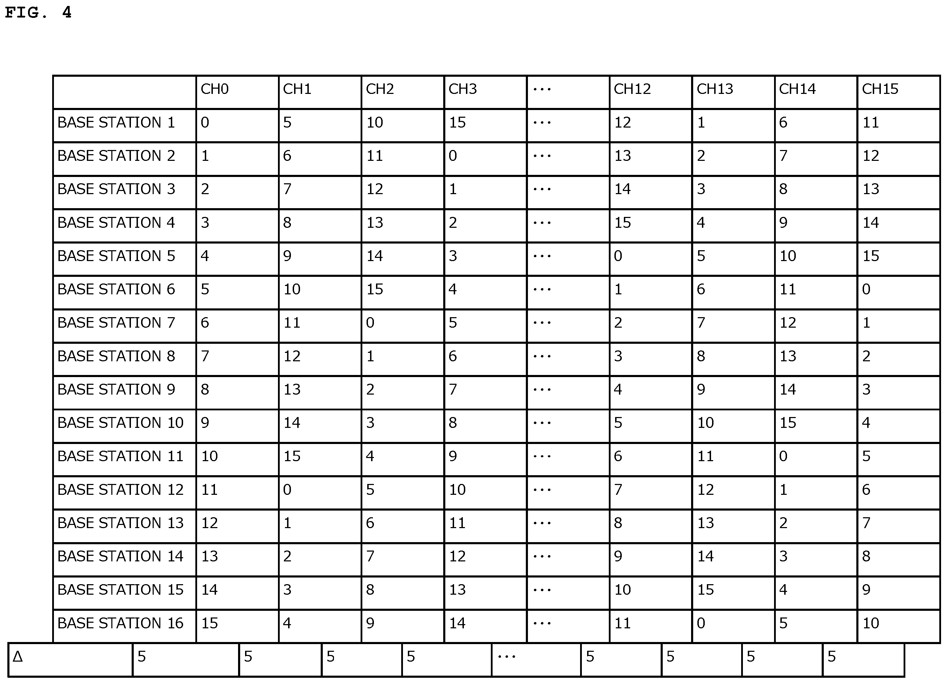

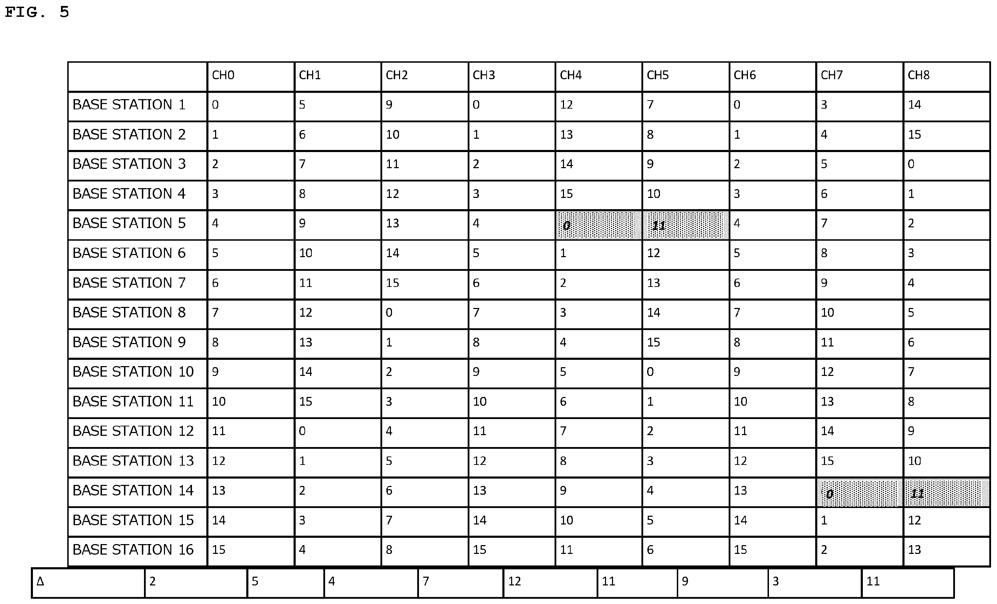

FIGS. 4 and 5 are diagrams illustrating the examples of the frequency hopping pattern sequences and hop change amount arrays.

FIGS. 4 and 5 indicate that there are 16 ground wireless devices 14, which are used as base stations, and depict the frequency hopping pattern sequences for each of the ground wireless devices 14. The 16 ground wireless devices 14 are used as base stations 1 to 16.

In FIGS. 4 and 5, the time-division channels are arranged horizontally. Further, the sequence length is 9, and frequency channel switching occurs when time-division channel switching occurs.

In the frequency hopping pattern of FIG. 4, the sequence length of hopping is 16, and the hop change amount array is common to all base stations and all element values are standardized to 5.

Conventionally, the frequency hopping patterns are often formed in such a manner that all hop change amounts are the same as depicted in FIG. 4. That is to say, the elements of the hop change amount array $\Delta$ are the same.

Referring to FIG. 4, if different base stations accidentally have the same timing of a specific frequency channel (e.g., CH0) due to a frequency hopping timing error in a case where the elements of the array $\Delta$ are the same for all ground wireless devices 14, interference occurs consecutively because subsequent hop change amount arrays $\Delta$ completely match.

For example, CH1 of base station 5 depicted in FIG. 4 uses frequency channel 9. Similarly, CH2 of base station 16 also uses frequency channel 9.

When base station 5 and base station 16 are synchronized, they also have the same frequency hopping timing. Therefore, if CH1 of base station 5 and CH1 of base station 16 use different frequency channels, no mutual interference occurs between the base stations.

However, in a case where base station 5 and base station 16 are not synchronized, and for example, CH2 of base station 16 is used while CH1 of base station 5 is used, both base stations use frequency channel **9.**

Since the hop change amounts of base station 5 and base station 16 are the same, the frequency channel in a case where base station 5 performs frequency hopping to CH2 is frequency channel 14, which is the same as the frequency channel in a case where base station 16 performs frequency hopping to CH3.

Stated differently, the frequency channel in a case where base station 5 performs frequency hopping and the frequency channel in a case where base station 16 performs frequency hopping occur consecutively between the base stations depending on the degree of timing discrepancy.

Consequently, the wireless communication system 100 enters a state in which wireless communication interference occurs consecutively or does not occur at all. Therefore, the degree of mutual interference is unstable.

In this instance, there is a risk that wireless communication may become completely unusable due to mutual interference.

In order to prevent such an incident in which wireless communication becomes unusable due to mutual interference, the wireless communication system 100 provided by the present disclosure is configured such that the wireless control device 11 calculates a frequency hopping pattern to prevent mutual interference even when the base stations are not synchronized with each other.

FIG. 5 illustrates the mutual interference in a case where the hop change amount varies from one frequency hopping to another.

FIG. 5 differs from FIG. 4 in that the elements of the hop change array $\Delta$ are at least consecutively different.

Specifically, in the example of FIG. 5, for example, when frequency hopping is performed from a time-division channel CH 4 of base station 5 to CH5, the hop change amount is 11; however, when frequency hopping is performed from CH5 to CH6, the hop change amount is **9.**

In this instance, frequency channel 0 is selected for CH4 of base station 5, and frequency channel 11 is selected for CH5.

Similarly, frequency channel 0 is selected for CH7 of base station 11, and frequency channel 11 is selected for CH8.

In respect to the above, mutual interference in the wireless communication system 100 in a case where the frequency hopping timing is synchronized between the base stations and in a case where the frequency hopping timing is not synchronized between the base stations will be described.

\<When Frequency Hopping Timing Is Synchronized\>

First of all, a case where the frequency hopping between the base stations is synchronized will be described.

When the frequency hopping timing is synchronized between the base stations, and more specifically, when the timing is synchronized, for example, between base station 5 and base station 11, wireless communication is performed in principle through the same time-division channel.

That is to say, when base station 5 is communicating through CH4, base station 11 is also communicating through CH4.

In this instance, base station 5 is communicating through frequency channel **0.** Similarly, base station 11 is communicating through frequency channel 6.

Since the timing at which the time-division channel of base station 5 switches is synchronized with the timing at which the time-division channel of base station 11 switches, the switching occurs almost simultaneously.

That is to say, CH5 of base station 5 communicates through frequency channel 11, and CH5 of base station 11 starts communicating through frequency channel 1.

In this instance, no mutual interference occurs because base station 5 and base station 11 use different frequency channels for communication.

Similarly, even when the switching is made to time-division channel **6,** no mutual interference occurs because base station 5 and base station 11 use different frequency channels for communication.

<When Frequency Hopping Timing Is Not Synchronized>

A case where the frequency hopping between the base stations is not synchronized will now be described.

When the frequency hopping timing is not synchronized between the base stations, and more specifically, when the timing is not synchronized, for example, between base station 5 and base station 14, there is a risk that wireless communication may be performed through different time-division channels.

When, for example, base station 5 is communicating through time-division channel **4,** base station 14 may be communicating through time-division channel **7.**

That is to say, time-division channel switching is performed independently by each base station. In some cases, therefore, base station 11 may perform time-division channel switching earlier than base station 5.

In the above instance, base station 5 is communicating through frequency channel 0, and at the same time, base station 14 is communicating through frequency channel 0.

When base station 5 subsequently switches to time-division channel 5, base station 5 communicates through frequency channel 11.

If, in the above instance, base station 14 switches to time-division channel 8, base station 14 communicates through frequency channel 11.

Stated differently, if frequency channel 0 is selected at the same time by base station 5 and base station 14, communication interference will occur consecutively on frequency channel 11 when the next time-division channel is used.

For example, in a case where the ground wireless device 14a depicted in FIG. 5 is used as base station 5 while the ground wireless device 14b is used as base station 14, the sequence of base station 5 is expressed by Equation (3). Similarly, the sequence of base station 14 is expressed by Equation (4).

For example, when base station 5 communicates through time-division channel 4, n=4, F(m)=0, and F(m+1)=11 in Equation (3).

For example, when base station 14 communicates through time-division channel 7, m=7, F(o)=0, and F(o+1)=11 in Equation (4).

Stated differently, base station 5 may communicate through time-division channel 4, and base station 14 may communicate through time-division channel 7.

In this instance, F(m)=0, and similarly, F(o)=0. That is to say, frequency channel 0, which is used by base station 5 for communication through time-division channel 4, adopts the same frequency as frequency channel 0, which is used by base station 14 for communication through time-division channel 7. This results in the occurrence of mutual interference.

When frequency hopping is performed by base station 5, it communicates through frequency channel 11, which is used by base station 5 for time-division channel 5.

In this instance, when frequency hopping is similarly performed by base station 14, it communicates through frequency channel 11, which is used by base station 14 for time-division channel 8.

That is to say, frequency channel 11, which is used by base station 5 for communication through time-division channel 5, adopts the same frequency as frequency channel 11, which is used by base station 14 for communication through time-division channel 8.

Consequently, if frequency hopping is performed by base station 5 and base station 14, there is a risk that mutual interference may occur consecutively.

As described above, if time-division channel switching timing is not synchronized between the base stations, there is a risk that a plurality of base stations may use the same frequency channel consecutively at a specific timing.

The wireless control device 11 is able to suppress consecutive occurrences of interference as long as attention is paid to the design of the array $\triangle$.

When a hopping pattern depicted, for example, in FIG. 5 is to be designed, the following requirements should preferably be met.

(1) The same array Δ is applied to all base stations.

(2) The value of F(n-1) immediately preceding Δ(n) varies from one base station to another.

(3) The sum of the array Δ is an integer multiple of the number of frequency channels **(e.g.,** an integer multiple of 16 in the case of FIG. 5).

(4) There are no identical values in the array Δ.

For example, if the allocation of time-division channel 0 is the same as depicted in FIG. 5 in a case where the above requirements are met, relevant conditions can be satisfied when the array Δ is set to 1, 7, 11, **2,** 12, **5, 9,** 13, 4 and applied to all base stations.

This makes it possible to design a hopping pattern that avoids two consecutive occurrences of interference.

Additionally, the present invention is based on the premise that the number of base stations is less than the number of frequency channels.

This makes it possible to avoid consecutive occurrences of interference between nearby base stations.

Further, when the number of base stations, namely, the number of ground wireless devices 14, is more than the number of frequency channels, an attempt is made to reuse the hopping patterns after a sufficient distance is provided between each base station to reduce mutual interference to a negligible level.

As described above, the present embodiment makes it possible to prevent mutual interference from occurring consecutively due to deviation in frequency hopping between a plurality of ground wireless devices 14 to which different frequency hopping pattern sequences are applied.

That is to say, even if the plurality of ground wireless devices 14 are not synchronized in terms of frequency hopping, it is possible to perform setup in such a manner that different ground wireless devices 14 avoid using the same frequency channel consecutively wherever possible.

This makes it possible to avoid an extreme decrease in the reliability of data communications due to mutual interference between the ground wireless devices 14 and the mobile wireless devices 15.

[Modification]

A modification of the wireless communication system 100 according to the first embodiment will now be described.

A wireless communication system 200 according to the modification differs from the wireless communication system 100 according to the first embodiment in that the same data is transmitted multiple times consecutively in order to increase the reliability of communication between the ground wireless devices 14 and the mobile wireless devices 15, and that a successful result will be obtained by at least one transmission.

In the following description, component elements identical or similar to each other are designated by the same reference signs as the first embodiment and the like. Further, the description of such component elements will be simplified or omitted.

As indicated in FIG. 5, the wireless communication system 100 is able to estimate, based on the frequency hopping pattern sequences and the hop change amount arrays, the maximum number of consecutive times that mutual interference can occur.

For example, the wireless communication system 100 may experience up to two consecutive occurrences of interference as indicated in FIG. 5.

The wireless communication system 200 transmits in a frequency hopping pattern that prevents three or more consecutive occurrences of interference.

For example, in a case where the sequence length of the frequency hopping pattern of the wireless communication system 200 is 9 as is the case with FIG. 3, the wireless communication system 200 performs transmission by dividing into first three time-division channels, middle three time-division channels, and last three time-division channels. That is to say, a time-division channel with a sequence length of 3 is transmitted three times consecutively.

The wireless communication system 200 according to the present modification divides the time-division channel into channels with a sequence length of 3 for transmission. However, the time-division channel may be divided into channels with a sequence length of other than 3 as long as no mutual interference occurs.

For example, the frequency hopping patterns depicted in FIG. 3 prevent the mutual interference from occurring two or more consecutive times. That is why the time-division channel is divided into channels with a sequence length of 3. However, in the case of a frequency hopping pattern that prevents the mutual interference from occurring three or more consecutive times, the time-division channel may be divided into channels with a sequence length of 4.

As described above, the wireless communication system 200 according to the present modification transmits data consecutively a number of times more than the upper limit number of times that mutual interference occurs consecutively. That is to say, the wireless communication system 200 is able to avoid mutual interference at least once.

As a result, even if frequency hopping is not synchronized between a plurality of ground wireless devices 14, a state in which no mutual interference occurs between the base stations can be created at least once. This makes it possible to improve the reliability of data communication.

Additionally, the present invention can take the following aspects.

(Aspect 1)

There is provided a wireless device including a change amount calculation section and a hopping pattern calculation section. The change amount calculation section calculates the amount of change in a frequency channel of a frequency hopping pattern for frequency hopping that is repeatedly performed by a plurality of wireless devices. The hopping pattern calculation section calculates the frequency hopping pattern in accordance with the amount of change in the frequency channel. The hopping pattern calculation section calculates the frequency hopping pattern that prevents the same frequency channel from being used consecutively between the different wireless devices even if the amount of change is the same.

(Aspect 2)

The wireless device as described in aspect 1 is configured such that the hopping pattern calculation section calculates the frequency hopping pattern in accordance with Equation (1) below.

[Equation 5]

$$F(n) = \{F(n-1) + \Delta(n)\} mod N_{ch} \cdot\cdot\cdot (1)$$

(Aspect 3)

The wireless device as described in aspect 1 or 2 is configured such that the change amount calculation section represents the change amount as a change amount array expressed according to Equation (2) below, and that the change amount array does not include identical elements consecutively.

[Equation 6]

$$\Delta = [\Delta(0) \quad \Delta(1) \quad \cdots \quad \Delta(L-1)] \cdot\cdot\cdot (2)$$

(Aspect 4)

The wireless device as described in aspect 3 is configured such that the elements included in the change amount array are not identical three times consecutively.

(Aspect 5)

The wireless device as described in any one of aspects 1 to 4 further includes an initial value calculation section that calculates an initial value of the frequency hopping pattern. The hopping pattern calculation section calculates the frequency hopping pattern in accordance with the initial value and the change amount.

(Aspect 6)

There is provided a frequency hopping pattern generation method including the steps of: calculating the amount of change in a frequency channel of a frequency hopping pattern for frequency hopping that is repeatedly performed by a plurality of wireless devices, and calculating the frequency hopping pattern in accordance with the amount of change in the frequency channel.

(Aspect 7)

There is provided a program that causes a computer to perform a process including a change amount calculation step and a hopping pattern calculation step. The change amount calculation step calculates the amount of change in a frequency channel of a frequency hopping pattern for frequency hopping that is repeatedly performed by a plurality of wireless devices. The hopping pattern calculation step calculates the frequency hopping pattern in accordance with the amount of change in the frequency channel.

(Aspect 8)

There is provided a wireless communication system including a wireless control device, a ground wireless device, and a mobile wireless device. The wireless control device calculates a frequency hopping pattern for frequency hopping repeatedly performed by a plurality of ground wireless devices, and provides control over wireless communication. The ground wireless device is formed by a transmitter, a receiver, or a combination of a transmitter and a receiver that is fixed to the ground. The mobile wireless device is formed by a transmitter, a receiver, or a combination of a transmitter and a receiver that is carried and operated during movement or during its stoppage at an unspecified location. The wireless control device calculates the frequency hopping pattern that prevents the same frequency channel from being used consecutively between the different ground wireless devices. The ground wireless device and the mobile wireless device perform frequency hopping in accordance with the frequency hopping pattern calculated by the wireless control device.

List of Reference Signs

11: Wireless control device
12: First data transmission device
13: Backhaul network
14: Ground wireless device
15: Mobile wireless device
16: Second data transmission device
30: Time-division channel

**Claims**

1. A wireless device comprising:

   a change amount calculation section that calculates the amount of change in a frequency channel of a frequency hopping pattern for frequency hopping repeatedly performed by a plurality of wireless devices; and
   a hopping pattern calculation section that calculates the frequency hopping pattern in accordance with the amount of change in the frequency channel;
   wherein the hopping pattern calculation section calculates the frequency hopping pattern that prevents the same frequency channel from being used consecutively between the different wireless devices even if the amount of change is the same.

2. The wireless device according to claim 1,
   wherein the hopping pattern calculation section calculates the frequency hopping pattern in accordance with Equation (1) below.

   [Equation 7]

   $$F(n) = \{F(n-1) + \Delta(n)\} mod N_{ch} \cdot\cdot\cdot (1)$$

3. The wireless device according to claim 1,

   wherein the change amount calculation section represents the change amount as a change amount array expressed according to Equation (2) below, and

that the change amount array does not include identical elements consecutively.

[Equation 8]

$$\Delta = [\Delta(0) \quad \Delta(1) \quad \cdots \quad \Delta(L-1)] \cdots (2)$$

4. The wireless device according to claim 3,
   wherein the elements included in the change amount array are not identical three times consecutively.

5. The wireless device according to claim 1, further comprising:

   an initial value calculation section that calculates an initial value of the frequency hopping pattern;
   wherein the hopping pattern calculation section calculates the frequency hopping pattern in accordance with the initial value and the change amount.

6. A frequency hopping pattern generation method comprising the steps of:

   calculating the amount of change in a frequency channel of a frequency hopping pattern for frequency hopping that is repeatedly performed by a plurality of wireless devices; and
   calculating the frequency hopping pattern in accordance with the amount of change in the frequency channel.

7. A program that causes a computer to perform a process comprising:

   a change amount calculation step of calculating the amount of change in a frequency channel of a frequency hopping pattern for frequency hopping that is repeatedly performed by a plurality of wireless devices; and
   a hopping pattern calculation step of calculating the frequency hopping pattern in accordance with the amount of change in the frequency channel.

8. A wireless communication system comprising:

   a wireless control device that calculates a frequency hopping pattern for frequency hopping repeatedly performed by a plurality of ground wireless devices, and provides control over wireless communication;
   a ground wireless device formed by a transmitter, a receiver, or a combination of a transmitter and a receiver that is fixed to the ground; and
   a mobile wireless device formed by a transmitter, a receiver, or a combination of a transmitter and a receiver that is carried and operated during movement or during its stoppage at an unspecified location;
   wherein the wireless control device calculates the frequency hopping pattern that prevents the same frequency channel from being used consecutively between the different ground wireless devices; and
   the ground wireless device and the mobile wireless device perform frequency hopping in accordance with the frequency hopping pattern calculated by the wireless control device.

FIG. 1

FIG. 2

EP 4 642 129 A1

# FIG. 3

TIME-DIVISION CHANNEL

Tch

| | | | | | | | | | | | |
|---|---|---|---|---|---|---|---|---|---|---|---|
| 1,1 | 1,2 | 1,3 | 1,4 | 1,5 | 1,6 | 1,7 | 1,8 | 1,9 | 1,10 | 1,11 | 1,12 |

GROUND WIRELESS DEVICE 14 a

| | | | | | | | | | | | |
|---|---|---|---|---|---|---|---|---|---|---|---|
| 2,1 | 2,2 | 2,3 | 2,4 | 2,5 | 2,6 | 2,1 | 2,2 | 2,3 | 2,10 | 2,11 | 2,12 |

GROUND WIRELESS DEVICE 14 b

TIME ⟶

EXAMPLE OF FREQUENCY HOPPING PATTERN SEQUENCE

| FH 1,1 | FH 1,2 | FH 1,3 | FH 1,4 | FH 1,5 | FH 1,6 | FH 1,1 | FH 1,2 | FH 1,3 | FH 1,4 | FH 1,5 | FH 1,6 |
|---|---|---|---|---|---|---|---|---|---|---|---|
| FH 2,1 | FH 2,2 | FH 2,3 | FH 2,4 | FH 2,5 | FH 2,6 | FH 2,1 | FH 2,2 | FH 2,3 | FH 2,4 | FH 2,5 | FH 2,6 |

EXAMPLE OF FREQUENCY HOPPING PATTERN SEQUENCE

| FH1,1 | FH1,2 | FH1,3 | FH1,1 | FH1,2 | FH1,3 |
|---|---|---|---|---|---|
| FH2,1 | FH2,2 | FH2,3 | FH2,1 | FH2,2 | FH2,3 |

EP 4 642 129 A1

FIG. 4

| | CH0 | CH1 | CH2 | CH3 | ... | CH12 | CH13 | CH14 | CH15 |
|---|---|---|---|---|---|---|---|---|---|
| BASE STATION 1 | 0 | 5 | 10 | 15 | ... | 12 | 1 | 6 | 11 |
| BASE STATION 2 | 1 | 6 | 11 | 0 | ... | 13 | 2 | 7 | 12 |
| BASE STATION 3 | 2 | 7 | 12 | 1 | ... | 14 | 3 | 8 | 13 |
| BASE STATION 4 | 3 | 8 | 13 | 2 | ... | 15 | 4 | 9 | 14 |
| BASE STATION 5 | 4 | 9 | 14 | 3 | ... | 0 | 5 | 10 | 15 |
| BASE STATION 6 | 5 | 10 | 15 | 4 | ... | 1 | 6 | 11 | 0 |
| BASE STATION 7 | 6 | 11 | 0 | 5 | ... | 2 | 7 | 12 | 1 |
| BASE STATION 8 | 7 | 12 | 1 | 6 | ... | 3 | 8 | 13 | 2 |
| BASE STATION 9 | 8 | 13 | 2 | 7 | ... | 4 | 9 | 14 | 3 |
| BASE STATION 10 | 9 | 14 | 3 | 8 | ... | 5 | 10 | 15 | 4 |
| BASE STATION 11 | 10 | 15 | 4 | 9 | ... | 6 | 11 | 0 | 5 |
| BASE STATION 12 | 11 | 0 | 5 | 10 | ... | 7 | 12 | 1 | 6 |
| BASE STATION 13 | 12 | 1 | 6 | 11 | ... | 8 | 13 | 2 | 7 |
| BASE STATION 14 | 13 | 2 | 7 | 12 | ... | 9 | 14 | 3 | 8 |
| BASE STATION 15 | 14 | 3 | 8 | 13 | ... | 10 | 15 | 4 | 9 |
| BASE STATION 16 | 15 | 4 | 9 | 14 | ... | 11 | 0 | 5 | 10 |
| Δ | 5 | 5 | 5 | 5 | ... | 5 | 5 | 5 | 5 |

EP 4 642 129 A1

# FIG. 5

| | CH0 | CH1 | CH2 | CH3 | CH4 | CH5 | CH6 | CH7 | CH8 |
|---|---|---|---|---|---|---|---|---|---|
| BASE STATION 1 | 0 | 5 | 9 | 0 | 12 | 7 | 0 | 3 | 14 |
| BASE STATION 2 | 1 | 6 | 10 | 1 | 13 | 8 | 1 | 4 | 15 |
| BASE STATION 3 | 2 | 7 | 11 | 2 | 14 | 9 | 2 | 5 | 0 |
| BASE STATION 4 | 3 | 8 | 12 | 3 | 15 | 10 | 3 | 6 | 1 |
| BASE STATION 5 | 4 | 9 | 13 | 4 | *0* | *11* | 4 | 7 | 2 |
| BASE STATION 6 | 5 | 10 | 14 | 5 | 1 | 12 | 5 | 8 | 3 |
| BASE STATION 7 | 6 | 11 | 15 | 6 | 2 | 13 | 6 | 9 | 4 |
| BASE STATION 8 | 7 | 12 | 0 | 7 | 3 | 14 | 7 | 10 | 5 |
| BASE STATION 9 | 8 | 13 | 1 | 8 | 4 | 15 | 8 | 11 | 6 |
| BASE STATION 10 | 9 | 14 | 2 | 9 | 5 | 0 | 9 | 12 | 7 |
| BASE STATION 11 | 10 | 15 | 3 | 10 | 6 | 1 | 10 | 13 | 8 |
| BASE STATION 12 | 11 | 0 | 4 | 11 | 7 | 2 | 11 | 14 | 9 |
| BASE STATION 13 | 12 | 1 | 5 | 12 | 8 | 3 | 12 | 15 | 10 |
| BASE STATION 14 | 13 | 2 | 6 | 13 | 9 | 4 | 13 | *0* | *11* |
| BASE STATION 15 | 14 | 3 | 7 | 14 | 10 | 5 | 14 | 1 | 12 |
| BASE STATION 16 | 15 | 4 | 8 | 15 | 11 | 6 | 15 | 2 | 13 |

| Δ | 2 | 5 | 4 | 7 | 12 | 11 | 9 | 3 | 11 |
|---|---|---|---|---|---|---|---|---|---|

EP 4 642 129 A1

## INTERNATIONAL SEARCH REPORT

| International application No. |
| --- |
| **PCT/JP2023/038806** |

### A.    CLASSIFICATION OF SUBJECT MATTER

**_H04W 72/0453_**(2023.01)i
FI:   H04W72/0453

According to International Patent Classification (IPC) or to both national classification and IPC

### B.    FIELDS SEARCHED

Minimum documentation searched (classification system followed by classification symbols)

H04W72/0453

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| X | US 2005/0078737 A1 (TELEFONAKTIEBOLAGET LM ERICSSON) 14 April 2005 (2005-04-14)<br>    paragraphs [0096]-[0101], fig. 7D, 7E | 1, 5-8 |
| A | | 2-4 |

| ☐ Further documents are listed in the continuation of Box C. | ☑ See patent family annex. |
| --- | --- |

|   | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 December 2023** | **09 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| International application No. |
| --- |
| **PCT/JP2023/038806** |

| Patent document cited in search report | Publication date (day/month/year) | Patent family member(s) | Publication date (day/month/year) |
| --- | --- | --- | --- |
| US 2005/0078737 A1 | 14 April 2005 | WO 2005/034378 A1 paragraphs [0100]-[0105], fig. 7D, 7E<br>EP 1673879 B1<br>CN 1864342 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000151468 A